# EUROPÄISCHE PATENTSCHRIFT

(11) **EP 0 692 655 B1**
(45) Veröffentlichungstag und Bekanntmachung des Hinweises auf die Patenterteilung: **29.10.1997**
(21) Anmeldenummer: 95106991.3
(22) Anmeldetag: 09.05.1995
(51) Int. Cl.: F16H 61/14

(54) **Pulsweitenmoduliertes Magnetventil zum Steuern von hydrodynamischen Drehmomentwandlern automatischer Schaltgetriebe**
Pulse modulated magnetic control valve for a hydrodynamic torque converter of an automatic transmission
Soupape magnétique à modulation d'impulsions pour la commande d'un convertisseur de couple hydrodynamique d'une transmission automatique

(30) Priorität: 14.07.1994 DE 4424945
(43) Veröffentlichungstag der Anmeldung: 17.01.1996
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Wirtz, Hans-Peter, D-50769 Köln (DE)
(74) Vertreter: Neidl-Stippler, Cornelia, Dr.

(56) Entgegenhaltungen:
- DE-A- 4 028 548
- DE-A- 4 328 503
- US-A- 4 466 311

## Beschreibung

Die Erfindung betrifft ein pulsweitenmoduliertes Magnetventil zum Steuern von hydrodynamischen Drehmomentwandlern automatischer Schaltgetriebe nach Patentanspruch 1.

Automatische Schaltgetriebe von Kraftfahrzeugen sind im allgemeinen mit hydrodynamischen Drehmomentwandlern ausgestattet, wie sie bspw. in der EP-A-0433619 oder der EP-A-419782 oder allgemein in Gerigk, Bruhn, Danner "Kraftfahrzeugtechnik", Westermann-Verlag, 2. Auflage, 1993, Seite 349 bis 351 angegeben sind. Hydrodynamische Drehmomentwandler ermöglichen ein sanftes, ruckfreies Anfahren des Kraftfahrzeuges bei niedrigen Drehzahlen der Antriebswelle des Motors sowie ein weiches Schalten des automatischen Getriebes. Durch Verwendung hydrodynamischer Drehmomentwandler erfolgt eine geräuscharme, verschleißarme und stufenlose Übertragung des Motordrehmomentes auf das Getriebe.

Aus der DE-A-4 028 548 ist ein gattungsgemäßes Ventil mit einem elektromagnetischen Schaltelement und einem Ventilkörper bekanntgeworden, der eine Steuerdruckkammer für ein fluides Medium; einen Steuerkolben mit mindestens einer Steuernut; einen Steuerdruck-Anschluß zur Steuerdruckkammer für das fluide Medium; mindestens einen die Steuerdruckkammer mit mindestens einem Ausgang verbindenden ersten Druckanschluß; mindestens einen mindestens eine Arbeitskammer mit mindestens einem Ausgang verbindenden zweiten Druckanschluß aufweist; wobei mindestens ein Druckanschluß mit mindestens einem Ausgang durch eine am Steuerkolben angeordnete Steuernut verbindbar ist.

Hydrodynamische Drehmomentwandler umfassen ein mit der Antriebswelle verbundenes Pumpenrad, ein sich über einen Freilauf abstützendes Leitrad und ein mit der in das Getriebe führenden Welle verbundenes Turbinenrad. Das Gehäuse des Drehmomentwandlers, in dem die vorgenannten Bauteile angeordnet sind, wird über ein Leitungssystem mit einer Druckflüssigkeit, im Kraftfahrzeugbereich meist Hydrauliköl, vollständig gefüllt. Der Druck im hydrodynamischen Drehmomentwandler wird über Steuerventile geregelt. Nachfolgend wird die Erfindung anhand von Hydrauliköl erläutert werden, wobei sie keineswegs auf Hydrauliköl als Druckmedium beschränkt ist.

Bei niedrigen Eingangsdrehzahlen überträgt das Pumpenrad die Bewegungsenergie auf das Hydrauliköl, das das Turbinenrad gleichfalls in Bewegung versetzt. Mit Hilfe des Leitrades wird der Hydraulikölstrom so umgelenkt, daß die Wirkung des Pumpenrades verstärkt wird. Dieser Schaltzustand des Drehmomentwandlers wird als Unlock-Lage bezeichnet.

Bei hohen Drehzahlen verbindet eine zwischen dem mit dem Pumpenrad verbunden Antrieb und dem Turbinenrad angeordnete Kupplungseinheit das Pumpenrad kraftschlüssig mit dem Turbinenrad (sogenannte Lock-Up-Lage).

Durch die kraftschlüssige Übertragung des Drehmomentes in der Lock-Up-Lage wird ein unruhiges Verhalten des Antriebes direkt über den Drehmomentwandler auf das Getriebe übertragen, wodurch das Fahrverhalten des Fahrzeuges nachteilig beeinflußt wird.

Um eine ruckfreie Übertragung des Drehmomentes im Wandler auch in der Lock-Up-Lage gewährleisten zu können, kann der Schlupf zwischen Pumpenrad und Turbinenrad variiert werden. Mit Hilfe von Steuerventilen wird der Druck der Hydraulikflüssigkeit innerhalb des Drehmomentwandlers verändert, so daß sich die Kupplungseinrichtung kurzzeitig öffnet. Dabei rutscht die Kupplung durch, d.h. der Schlupf zwischen Pumpenrad und Turbinenrad nimmt zu, und schlagartige, kurzfristige Drehmomentwechsel aufgrund unruhigem Antriebsverhaltens können ausgeglichen werden.

Zur Steuerung der Kupplungseinrichtung besitzt der hydrodynamische Drehmomentwandler zwei über ein Steuerventil angesteuerte Eingänge, die abhängig vom Schaltzustand der Kupplungseinrichtung mit unter Druck stehendem Hydrauliköl versorgt werden. Der erste der beiden Eingänge liegt direkt am Wandlergehäuse, während der zweite Eingang mit einem Hohlraum innerhalb der Kupplungseinrichtung verbunden ist.

Bei niedrigen Drehzahlen des Turbinenrades liegt am ersten Eingang der Kupplungseinrichtung ein niedriger Druck an, während der zweite Eingang mit einem deutlich höheren Druck beaufschlagt ist. Der Druckunterschied zwischen den Eingängen führt zu einem Auseinanderdrücken der Kupplungseinrichtung, die dadurch ausgekuppelt wird. Das über den zweiten Eingang in die Kupplungseinrichtung fließende Hydrauliköl strömt durch die Kupplungseinrichtung in das Wandlergehäuse und von dort über den ersten Eingang in das Leitungsnetz der Steuerungshydraulik (Unlock-Lage).

Ist der Schaltpunkt zwischen Unlock- und Lock-Up-Lage erreicht, wird der erste Eingang mit einem deutlich höheren Druck beaufschlagt als der zweite Eingang. Der jetzt im Wandlergehäuse wirkende Druck preßt gegen den Innendruck der Kupplungseinrichtung die Kupplungseinrichtung zusammen, so daß das Pumpenrad kraftschlüssig mit dem Turbinenrad verbunden ist (Lock-Up-Lage).

Um, wie oben erwähnt, den Schlupf zwischen Pumpenrad und Turbinenrad während der Lock-Up-Lage gezielt regeln zu können, wird der am ersten Eingang des Wandlers wirkende Druck mit Hilfe des Steuerventils variiert.

Da das Hydrauliköl durch die fortgesetzte Bewegung Walkarbeit unterworfen ist, muß das Hydrauliköl mit Hilfe einer meist außerhalb des Wandlers angeordneten Kühleinrichtung ständig gekühlt werden. Die Abzweigung des Hydrauliköls zum Kühler wird gleichfalls durch ein Steuerventil geregelt, das häufig dasselbe ist, das auch den Fluß des Hydrauliköls zum Wandler regelt.

Wird der hydrodynamische Drehmomentwandler in die Lock-Up-Lage geschaltet, werden gleichzeitig die Ölkanäle zum Drehmomentwandler und die Leitung zum Hydraulikölkühler durch das Steuerventil umgeschaltet.

Die Steuerung des Hydraulikölflusses, der in hydrodynamischen Drehmomentwandlern zum Antrieb der Turbinen- und Pumpenräder sowie zum Schalten der in den Drehmomentwandlern integrierten Kupplungen dient, erfolgt, wie oben angegeben, über Steuerventile, die meist pulsweitenmodulierte Magnetventile sind.

Pulsweitenmodulierte Magnetventile für hydrodynamische Drehmomentwandler sind bereits bekannt.

Sie umfassen ein elektromagnetisches Schaltelement und ein Steuerventil mit einem darin verschieblich angeordneten Steuerkolben, der die verschiedenen Ein- und Ausgänge des Steuerventils schließt bzw. öffnet. Am den elektromagnetischen Schaltelement zugewandten Ende des Ventilkörpers ist eine Steuerdruckkammer mit mehreren Ein- und Ausgängen angeordnet. An einem der Eingänge, dem Steuerdruck-Anschluß, der durch das elektromagnetische Schaltelement geöffnet und geschlossen wird, liegt ein im wesentlichen konstanter Steuerdruck von beispielsweise 8 bar an. Bei Betätigung des elektrischen Schaltelements wird der Steuerdruck-Anschluß geöffnet und der am Steuerdruck-Anschluß wirkende Steuerdruck verschiebt den Steuerkolben, wodurch ein mit der Steuerdruckkammer verbundener Wandlerkupplungs-Steuerdruck-Anschluß freigegeben wird. Über diesen Wandlerkupplungs-Steuerdruck-Anschluß strömt das Hydrauliköl in das Wandlergehäuse. Abhängig von der Öffnungsdauer des Steuerdruck-Anschlusses liegt der im Wandlergehäuse wirkende Druck zwischen 0 bar und dem maximalen Steuerdruck.

Das elektrische Schaltelement wird mit einer vorgegebenen Schaltfrequenz von beispielsweise 40 Hz betätigt, wobei die Öffnungsdauer des Steuerdruck-Anschlusses pro Schaltimpuls, die sogenannte Pulsweite, variiert werden kann. Durch Veränderung der Pulsweite kann der auf die Kupplungseinrichtung wirkende Steuerdruck zwischen 0 bar und dem Maximalwert (bis ca. 8 bar) geregelt werden, um den zwischen Pumpenrad und Turbinenrad wirkenden Schlupf gezielt beeinflussen zu können. Bleibt der Steuerdruck-Anschluß über die gesamte Pulsweite geöffnet, wirkt der maximale Steuerdruck und die Kupplung bleibt geschlossen, während bei einer geringeren Öffnungsdauer der Steuerdruck im Wandlergehäuse entsprechend abnimmt.

Durch das kurzfristige, schnelle Öffnen des Steuerdruck-Anschlusses enstehen Druckspitzen, die sich über den Wandlerkupplungs-Steuerdruck-Anschluß bis in das Wandlergehäuse fortpflanzen. Dadurch kommt es bei geschalteter Kupplung zu von den Druckspitzen beeinflußten Drehmomentschwankungen und zu damit verbundenem unruhigem Fahrverhalten.

Bisher wurde zur Steuerung ein pulsbreitenmoduliertes Magnetventil eingesetzt, das eine Feder am schaltelementabgewandten Ende des Ventilgehäuses aufweist, die eine Gegenkraft gegen das schnelle Ausfahren des Steuerkolben aufbringt und so die Beschleunigung des Steuerkolbens verzögert. Gleichzeitig läßt sich diese Gegenkraft zum Rückschalten des Ventils verwenden.

Dieses Magnetventil arbeitete bereits zufriedenstellend, führte aber bei mittleren bis kleinen Pulsweiten zum Verlassen der stabilen Lock-Up-Lage, wobei, bedingt durch die Federkraft am schaltelementabgewandten Ende einerseits und den in der Steuerdruckkammer auftretenden, zwischen 0 bar und maximalem Steuerdruck schwankenden Druck andererseits, ein eigenfrequenzabhängiges Hin- und Herschalten zwischen der Lock-Up-Lage und der Unlock-Lage verursacht wird. Die Feder wirkt bei solchen pulsbreitenmodulierten Magnetventilen als Energiespeicher, so daß bei einer bestimmten Drucksituation mit der Eigenfrequenz des Feder/Masse-Systems, das Ventil unkontrolliert zwischen Lock-Up-Lage und Unlock-Lage hin- und herschaltet.

Bei geschalteter Kupplung des hydrodynamischen Drehmomentwandlers, kommt es zu einem vom Magnetventil abhängigen Hin- und Herschalten der Kupplung zwischen Lock-Up-Lage und Unlock-Lage (Auskuppeln) und zu einem damit verbundenen unruhigen Fahrverhalten des Kraftfahrzeuges.

Es ist daher Aufgabe der Erfindung, ein pulsweitenmoduliertes Magnetventil zu schaffen, das ein ruhigeres Fahrverhalten ermöglicht.

Die Aufgabe wird erfindungsgemäß durch ein gattungsgemäßes, pulsweitenmoduliertes Magnetventil mit den Merkmalen des Patentanspruches 1 gelöst.

Vorteilhafte Weiterbildungen ergeben sich aus den Unteransprüchen.

So ist es vorteilhaft, wenn das pulsweitenmodulierte Magnetventil einen mit der Steuerdruckkammer verbundenen Steuerdruck-Anschluß; einen über die Steuerdruckkammer mit einem Gemeinschaftsdruck-Ausgang und dem Steuerdruck-Anschluß verbundenen Wandlerkupplungs-Steuerungsdruck-Anschluß; einen über eine erste Arbeitskammer mit einem Kühler-Ausgang verbundenen Wandlerkupplungs-Versorgungsdruck-Anschluß; und einen über eine zweite Arbeitskammer mit einem Wandlerkupplungs-Gegendruck-Ausgang verbundenen Versorgungsdruck-Anschluß aufweist, da dadurch mehrere Anschlüsse gleichzeitig miteinander verbunden werden können und somit der Steuerungsaufwand sinkt.

Weiterhin kann es günstig sein, wenn das einströmende fluide Medium ein Druckmedium, wie Hydrauliköl, ist, da Hydrauliköl im allgemeinen inkompressibel ist und gleichzeitig schmierende Eigenschaften besitzt und an das Aufgabengebiet optimal angepaßt ist.

Es ist auch günstig, wenn der Gegendruck in der Gegendruckkammer variabel ist, da somit Druckschwankungen innerhalb der Steuerdruckkammer ausgeglichen werden können.

Bevorzugt entspricht der Gegendruck in der Gegendruckkammer 0,1 - 5 bar, bevorzugt 1 - 3 bar und besonders bevorzugt ca 1 bar, wodurch eine hohe Belastung der Ölleitungssysteme vermieden werden kann.

Es kann günstig sein, wenn das Drosselelement mindestens ein Drosselventil aufweist, da durch das Drosselventil die Ausströmgeschwindigkeit des fluiden Mediums aus der Gegendruckkammer reguliert werden kann.

Weiterhin kann es günstig sein, wenn die Gegendruckkammer unterschiedliche Querschnitte aufweist, da so auf einfache Weise die Strömungsgeschwindigkeit des fluiden Mediums beeinflußt werden kann.

Durch Verwendung erfindungsgemäßer pulsweitenmodulierter Magnetventile ist ein Abbau der Druckspitzen möglich, so daß Drehmomentschwankungen im Wandler, die das Fahrverhalten des Kraftfahrzeuges negativ beeinflussen, vermieden werden können.

Sobald das elektromagnetische Schaltlelement den Steuerdruck-Anschluß öffnet, strömt das unter hohem Druck stehende fluide Medium in die Steuerdruckkammer und verschiebt dabei den Steuerkolben in Richtung der Gegendruckkammer. Durch das Verschieben des Steuerkolbens wird das in der Gegendruckkammer befindliche fluide Medium aus der Gegendruckkammer geschoben und strömt über eine Drossel zurück ins Ölleitungssystem. Da die Drossel die Strömungsgeschwindigkeit des fluiden Mediums verringert, baut sich in der Gegendruckkammer ein in Richtung der Steuerdruckkammer wirkender Gegendruck auf, der die hohe Beschleunigung des Steuerkolbens verzögert. Es kommt dabei zur Ausbildung einer sogenannten hydraulischen Sperre, d.h. der Steuerkolben ist zwischen den in der Steuerdruckkammer und der Gegendruckkammer wirkenden Drücken eingespannt.

Durch Erzeugung des in entgegengesetzter Richtung zum Steuerdruck wirkenden Gegendrucks in der Gegendruckkammer wird auch ein unerwünschtes Hin- und Herschalten des Magnetventils zwischen Lock-Up-Lage und Unlock-Lage bei mittleren und kleinen Pulsweiten durch Bildung der vorgenannten, hydraulischen Sperre verhindert. Gleichzeitig wird ein unkontrolliertes, eigenfrequenzabhängiges Schwingen des Kolbens, wie es bei einem Feder/Masse-System herkömmlicher Magnetventile entsteht, durch die hydraulische Sperre unmöglich gemacht.

Schließlich ermöglicht der in der Gegendruckkammer wirkende Gegendruck ein Sperren des Magentventils bei niedrigen Gängen, wie dem ersten Gang und dem Rückwärtsgang, da bei niedrigen Gängen eine Übertragung des Drehmoments nicht in der Lock-Up-Lage erfolgen soll.

Das erfindungsgemäße pulsweitenmodulierte Magnetventil verhindert somit ein unerwünschtes, kurzfristiges Schalten der Kupplung während der Unlock-Lage bzw. der Lock-Up-Lage auf verblüffend einfache Weise.

Nachfolgend wird die Erfindung anhand einer bevorzugten Ausführungsform sowie der begleitenden schematischen Zeichnung näher erläutert, wobei sie keineswegs auf diese beschränkt ist. Dabei zeigt:
- Fig. 1: einen Längsschnitt durch eine erfindungsgemäße Ausführungsform eines pulsweitenmodulierten Magnetventils in geöffnetem Zustand;
- Fig. 2: eine Übersichtszeichnung über die Drucksteuerung eines hydrodynamischen Drehmomentwandlers in der Unlock-Lage;
- Fig. 3: eine Übersichtszeichnung über die Drucksteuerung eines hydrodynamischen Drehmomentwandlers in der Lock-Up-Lage; und
- Fig. 4: ein Diagramm, das die Abhängigkeit der Druckschwankungen innerhalb der Gegendruckkammer von den Schwankungen des Steuerdrucks am Steuerdruck-Anschluß zeigt.

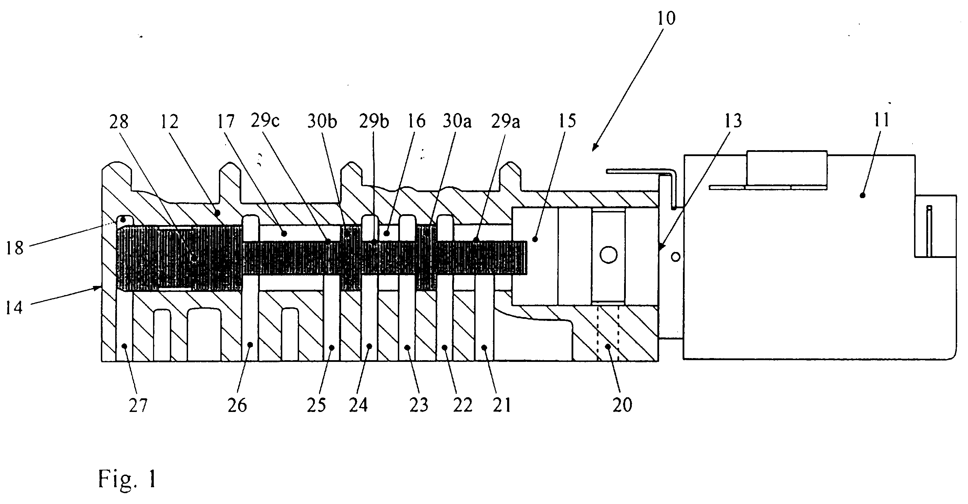

Eine bevorzugte Ausführungsform eines erfindungsgemäßen pulsweitenmodulierten Magnetventils 10, wie in Fig. 1 dargestellt, umfaßt ein elektromagnetisches Schaltelement 11 und einen Ventilkörper 12. Der Ventilkörper 12 mit einem schaltelementzugewandten Ende 13 und einem schaltelementabgewandten Ende 14 weist eine sich längs in Richtung des schaltelementabgewandten Endes 14 erstreckende Langlochbohrung auf. Die Langlochbohrung ist durch am Umfang der Bohrung angeordnete Vertiefungen in eine am schaltelementzugewandten Ende 13 angeordnete Steuerdruckkammer 15 und zwei sich daran anschließende Arbeitskammern 16 und 17 sowie eine die Langlochbohrung abschließende Gegendruckkammer 18 unterteilt.

Senkrecht zur Langlochbohrung verlaufende Bohrungen 20, 21, 22, 23, 24, 25, 26 und 27 im Ventilkörper 12 dienen als Anschlüsse für verschiedene Hydraulikölleitungen.

Ein in der Langlochbohrung längs verschiebbar angeordneter Steuerkolben 28, dessen schaltelementzugewandtes Ende in die Steuerdruckkammer 15 ragt, weist über den Umfang verteilte Steuernuten 29a, 29b und 29c und Steuererhebungen 30a und 30b auf. Diese Steuernuten 29a, 29b und 29c können, je nachdem, ob das Magnetventil 10 "geöffnet" oder "geschlossen" ist, die verschiedenen Ausgänge und Anschlüsse 20, 21, 22, 23, 24, 25 und 26, unter Bildung von Kammern 15, 16 und 17, miteinander verbinden.

Die am schaltelementabgewandten Ende 14 angeordnete Gegendruckkammer 18 ist mit einem Gegendruck-Anschluß 27 verbunden. Über diesen Gegendruck-Anschluß 27 wirkt ein Gegendruck von beispielsweise 1 bar, der die Bewegungsgeschwindigkeit des Steuerkolbens 28 verzögert und damit einen weichen Anschlag bildet, sobald der Steuerkolben 28 in geöffnetem Zustand des Magnetventils 10 in Richtung Gegendruckkammer 18 beschleunigt wird.

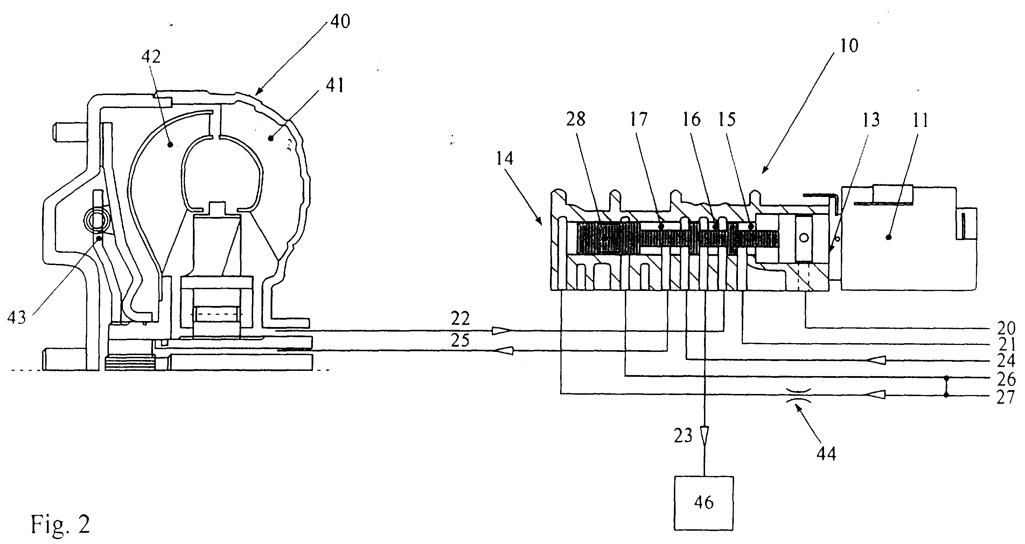

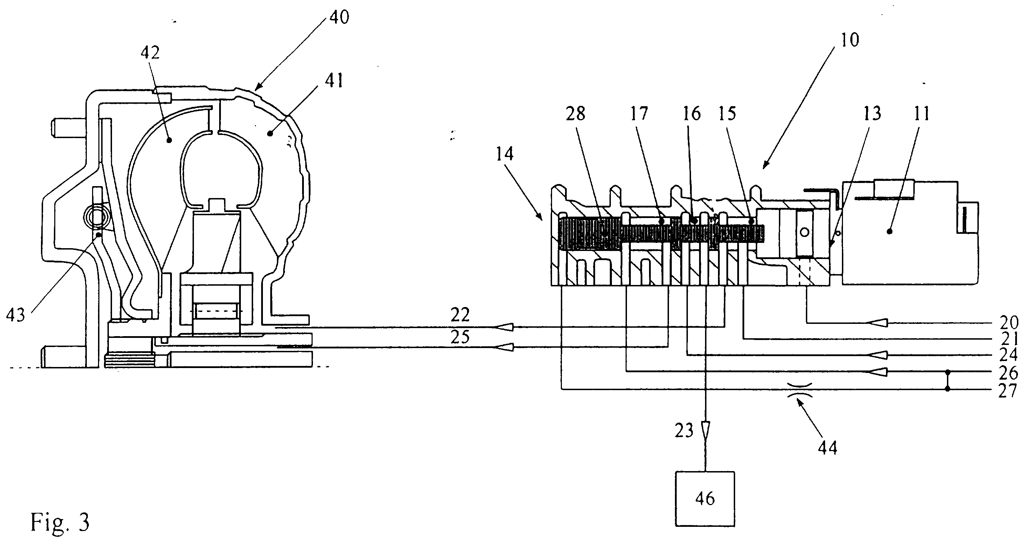

In Fig. 2 und 3 ist ein bekannter hydrodynamischer Drehmomentwandler 40 in Verbindung mit einem erfindungsgemäßen Magnetventil 10 gezeigt, wobei festzustellen ist, daß das erfindungsgemäße pulsweitenmodulierte Magnetventil 10 nicht auf diesen Typ hydrodynamischer Drehmomentwandler beschränkt ist. Der Drehmomentwandler 40 besitzt ein drehbar gelagertes Pumpenrad 41 und ein im Wandlergehäuse drehbar gelagertes Turbinenrad 42. Eine Kupplungseinrichtung 43 ermöglicht eine kraftschlüssige Verbindung des Pumpenrades 41 mit dem Turbinenrad 42, um so in der Lock-Up-Lage das vom Antrieb auf das Pumpenrad 41 übertragene Drehmoment ohne Verluste an das Turbinenrad 42 weiterzuleiten.

In Fig. 2 ist die Drucksteuerung eines hydrodynamischen Drehmomentwandlers in Unlock-Lage gezeigt, in der das erfindungsgemäße Magnetventil 10 geschlossen ist. Bei geschlossenem Magnetventil 10 sperrt das elektromagnetische Schaltelement 11 den Steuerdruck-Anschluß 20, so daß der Steuerkolben 28 in Richtung des schaltelementzugewandten Endes 13 in der Langlochbohrung verschoben ist. Zusätzlich wirkt in der Gegendruckkammer 18 ein Gegendruck, der den Steuerkolben 28 in der geschlossenen Position hält. Dadurch wird ein unerwünschtes Schwingen des Steuerkolbens 28 verhindert.

Außerdem sperrt der Gegendruck in der Gegendruckkammer 18 das Magnetventil 10 bei niedrigen Gängen, wie dem ersten Gang oder dem Rückwärtsgang, da bei diesen Gängen eine Übertragung des Drehmomentes im Wandler aufgrund des besseren Fahrkomforts nur in der Unlock-Lage erfolgen soll.

Ist der Steuerkolben 28 in geschlossener Position, kann Hydrauliköl aus dem Wandler 40 durch den Wandlerkupplungs-Steuerdruck-Anschluß 22 über die durch die zweite Steuernut 29b gebildete Arbeitskammer 16 und den Kühler-Ausgang 23 in den Kühler 46 fließen.

Gleichzeitig ermöglicht der Steuerkolben 28 eine Verbindung des Wandlerkupplungs-Versorgungsdruck-Anschlusses 24, an dem ein konstanter Druck von beispielsweise 1 bar anliegt, über die Arbeitskammer 17 mit dem Wandlerkupplungs-Gegendruck-Ausgang 25. Durch den am Wandlerkupplungs-Gegendruck-Ausgang 25 anliegenden Druck wird die im Drehmomentwandler 40 angeordnete Kupplungseinrichtung 43 geöffnet, so daß die kraftschlüssige Verbindung zwischen dem Pumpenrad 41 und dem Turbinenrad 42 gelöst ist. Da in der Leitung zwischen dem Wandlergehäuse und dem Wandlerkupplungs-Steuerdruck-Anschluß 22 ein geringerer Druck anliegt, strömt das Hydrauliköl aus dem Wandlerkupplungs-Gegendruck-Anschluß 25 über die Kupplungseinrichtung 43 in das Wandlergehäuse und von dort weiter über den Wandlerkupplungs-Steuerdruck-Anschluß 22 in den Kühler 46 (Unlock-Lage).

Fig. 3 zeigt den hydrodynamischen Drehmomentwandler in Lock-Up-Lage mit geöffnetem Magnetventil 10. Bei geöffnetem Magnetventil 10 öffnet das elektromagnetische Schaltelement 11 den Steuerdruck-Anschluß 20, an dem ein konstanter Druck von beispielsweise 8 bar anliegt. Durch das in die Steuerdruckkammer 15 fließende unter Druck stehende Hydrauliköl wird der Steuerkolben 28 in Richtung schaltelementabgewandtes Ende 14 beschleunigt. Dabei muß der Steuerkolben 28 gegen den in der Gegendruckkammer 18 wirkenden Gegendruck verschoben werden. Das in der Gegendruckkammer 18 befindliche Hydrauliköl wird verdichtet und über den Gegendruck-Anschluß 27 in das Ölleitungssystem zurückgeschoben. Eine in der mit dem Gegendruck-Anschluß 27 verbundenen Leitung angeordnete Drossel 44 verzögert die Strömungsgeschwindigkeit des Hydrauliköls, so daß sich der Gegendruck in der Gegendruckkammer 18 erhöht und der Steuerkolben 28 verzögert wird.

Sobald sich der Steuerkolben 28 in geöffneter Position befindet, entsteht eine Verbindung d es Wandlerkupplungs-Steuerdruck-Anschlusses 22 mit dem Steuerdruck-Anschluß 20 über die Arbeitskammer 15. Das unter hohem Druck stehende Hydrauliköl aus dem Steuerdruck-Anschluß 20 strömt über den Wandlerkupplungs-Steuerdruck-Anschluß 22 in das Gehäuse des Drehmomentwandlers 40.

Gleichzeitig ermöglicht der Steuerkolben 28 eine Verbindung des Wandlerkupplungs-Gegendruck-Anschlusses 25 über die durch die dritte Steuernut 29c gebildete Arbeitskammer 17 mit dem Versorgungsdruck-Anschluß 26, an dem ein konstanter Druck von beispielsweise 1 bar anliegt. Dieser wirkt über den Wandlerkupplungs-Gegendruck-Anschluß 25 auf die Kupplungseinrichtung 43 im Gehäuse des Wandlers 40. Durch den über den Wandlerkupplungs-Steuerdruck-Anschluß 22 wirkenden hohen Druck wird die Kupplungseinrichtung 43 gegen den in der Kupplungseinrichtung 43 wirkenden Druck aus dem Wandlerkupplungs-Gegendruck-Anschluß 25 vorgespannt, so daß es zu einer kraftschlüssigen Verbindung des Pumpenrades 41 mit dem Turbinenrad 42 kommt (Lock-Up-Lage).

Wird das Magentventil 10 wieder in die Unlock-Lage geschaltet, indem das elektromagentische Steuerelement 11 den Steuerdruck-Anschluß 20 verschließt, wird der Steuerkolben 28 durch den in der Gegendruckkammer 18 wirkenden Gegendruck gegen den noch in der Steuerdruckammer 15 wirkenden Druck wieder in die geschlossene Position verschoben.

Der Steuerkolben 28 ist dementsprechend immer zwischen zwei Hydraulikölpolstern eingespannt, wodurch ein eigenfrequenzabhängiges Schwingen verhindert wird.

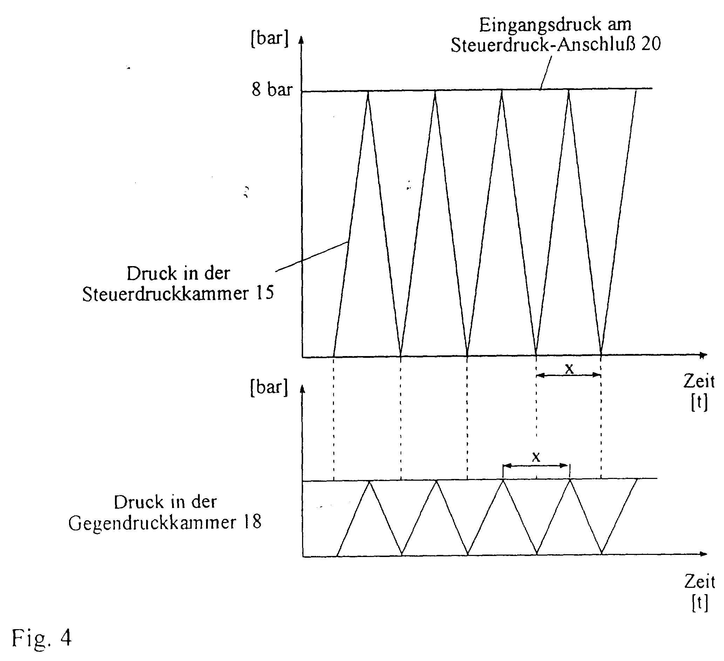

Fig. 4 zeigt den Zusammenhang zwischen dem Eingangsdruck am Steuerdruck-Anschluß 20, dem in der Steuerdruckkammer 15 wirkenden Druck und dem Druck in der Gegendruckkammer 18.

Pulsweitenmodulierte Magnetventile 10 werden mit einer Schaltimpulsfrequenz, die bei 20 bis 80 Hz, beispielsweise um 40 Hz, liegen kann, betrieben. Dabei öffnet und schließt das elektromagnetische Schaltelement 11 den Steuerdruck-Anschluß 20 bei jedem Schaltimpuls. Die Öffnungsdauer des Steuerdruck-Anschlusses 20 während eines Schaltimpulses - die sogenannte Pulsweite x - kann einen Zeitraum von 0 bis zur gesamten Dauer des Schaltimpulses umfassen. Ist eine Pulsweite von 0 % eingestellt, wird der Steuerdruck-Anschluß 20 während des gesamten Schaltimpulses nicht geöffnet. Liegt die Pulsweite bei 100 %, ist der Steuerdruck-Anschluß 20 während der gesamten Dauer des Schaltimpulses geöffnet. Durch Pulsweiten, die zwischen 0 % und 100 % liegen, können Drücke eingestellt werden, die zwischen 0 und dem maximalen Steuerdruck von beispielsweise 8 bar liegen.

Durch das plötzliche Öffnen des Steuerdruck-Anschlusses 20 während eines Schaltimpulses treten schnell große Druckdifferenzen - sogenannte Druckspitzen - auf, die den Steuerkolben 28 in Richtung Gegendruckkammer 18 beschleunigen. Diese Druckspitzen werden durch die Steuerdruckkammer 15 über den Wandlerkupplungs-Steuerdruck-Anschluß 22 bis in den Drehmomentwandler 40 übertragen.

Der in der Gegendruckkammer 18 wirkende Gegendruck wirkt der Bewegung des Steuerkolbens 28 entgegen, wodurch die Druckstöße gedämpft werden.

Mit zunehmendem Steuerdruck steigt auch der Gegendruck in der Gegendruckkammer, da durch die in der zum Gegendruck-Anschluß 27 führenden Leitung angeordnete Drossel 44 die Strömungsgeschwindigkeit des Hydrauliköls beschränkt ist. Je höher der in der Steuerdruckkammer 15 wirkende Steuerdruck und die damit verbundene Beschleunigung des Steuerkolbens 28 ist, desto höher ist auch die Auströmgeschwindigkeit des Hydrauliköls aus der Gegendruckkammer 18. Da die Drossel 44, wie oben erwähnt, die Ausströmgeschwindigkeit des Hydrauliköls beschränkt, steigt der Gegendruck in der Gegendruckkammer 15 an, d.h. je höher die Beschleunigung des Steuerkolbens 28, desto höher ist auch der der Beschleunigung entgegenwirkende Gegendruck. Der Gegendruck ist also - abhängig vom in der Steuerdruckkammer 15 wirkenden Steuerdruck - variabel.

Durch den Gegendruck können sich dementsprechend Druckschwingungen nur mit reduzierter Amplitude aufbauen. Bei kleinen Druckstößen ist dementsprechend die Dämpfung des Steuerkolbens 28 durch den Gegendruck geringer als bei großen, plötzlichen Druckstößen. Die über den Wandlerkupplungs-Steuerdruck-Anschluß 22 an den Wandler 40 übertragenen Druckstöße sind gedämpft und bewirken ein ruhiges Drehmomentübetragungsverhalten des Wandlers 40.

Der Gegendruck ermöglicht so auf einfache Weise eine deutliche Verbesserung des Drehmomentübertragungsverhaltens des Wandlers 40 bei plötzlich auftretenden, steuerungsbedingten Druckstößen.

Die Gegendruckkammer 18 kann entsprechend den an sie gestellten Anforderungen unterschiedliche geometrische Querschnittsformen und verschiedene Durchmesser aufweisen, um das Strömungsverhalten des aus- oder einströmenden Hydrauliköls zu beeinflussen.

Um den in der Gegendruckkammer 18 wirkenden Gegendruck zu unterstützen, kann in der Gegendruckkammer 18 außerdem ein Federelement, das beispielsweise mindestens eine Druckfeder oder Tellerfeder aufweist, angeordnet sein, das die Bewegung des Steuerkolbens 28 zusätzlich beeinflußt.

Obwohl die Erfindung anhand eines bevorzugten Ausführungsbeispiels erläutert wurde, sind dem Fachmann Abwandlungen und Änderungen ohne weiteres ersichtlich, die ebenfalls unter den Schutzumfang der Ansprüche fallen. Dieser ist daher keineswegs auf die beschriebene Ausführungsform beschränkt.

## Patentansprüche

1. Pulsweitenmoduliertes Magnetventil zum Steuern von hydrodynamischen Drehmomentwandlern automatischer Schaltgetriebe, mit: einem elektromagnetischen Schaltelement (11) und einem Ventilkörper (12), der:
- einen Steuerkolben (28) mit mindestens einer Steuernut (29a, 29b, 29c);
- eine Steuerdruckkammer (15) für ein fluides Medium mit einem Steuerdruck-Anschluß (20) und einem Ausgang (21), der mit mindestens dem Wandlerkupplungs-Steuerungsdruck-Anschluß (22) verbindet;
- eine am der Steuerdruckkammer (15) entgegengesetzten Ende des Ventilkörpers (12) angeordnete Gegendruckkammer (18) mit mindestens einer ein Drosselelement (44) aufweisenden Versorgungsleitung für das fluide Medium;
- einen über eine erste Arbeitskammer (16) mit einem Kühler-Ausgang (23) verbundenen Wandlerkupplungs-Versorgungsdruck-Anschluß (24); und
- einen über eine zweite Arbeitskammer (17) mit einem Wandlerkupplungs-Gegendruckausgang (25) verbundenen Versorgungsdruck-Anschluß (26) aufweist;
wobei über das fluide Medium ein Gegendruck aus der Versorgungsleitung zur Gegendruckkammer (18) zur Hemmung hoher Beschleunigungen des Steuerkolbens (28) in Richtung entgegengesetzt zum elektromagnetischen Schaltelement (11) bereitgestellt ist.

2. Pulsweitenmoduliertes Magnetventil nach Anspruch 1, dadurch gekennzeichnet, daß das einströmende fluide Medium ein Druckmedium, wie Hydrauliköl, ist.

3. Pulsweitenmoduliertes Magnetventil nach einem der vorangehenden Ansprüche, dadurch gekennzeichnet, daß der Gegendruck in der Gegendruckkammer (18) variabel ist.

4. Pulsweitenmoduliertes Magnetventil nach einem der vorangehenden Ansprüche, dadurch gekennzeichnet, daß der Gegendruck in der Gegendruckkammer (18) 0,1 - 5 bar, bevorzugt 1 - 3 bar und besonders bevorzugt ca 1 bar ist.

5. Pulsweitenmoduliertes Magnetventil nach einem der vorangehenden Ansprüche, dadurch gekennzeichnet, daß das Drosselelement (44) mindestens ein Drosselventil aufweist.

6. Pulsweitenmoduliertes Magnetventil nach einem der vorangehenden Ansprüche, dadurch gekennzeichnet, daß die Gegendruckkammer (18) unterschiedliche Querschnitte aufweist.

## Claims

1. A pulse width modulated magnetic valve for the control of hydrodynamic torque converters of automatic transmissions, comprising an electromagnetic control element (11) and a valve body (12) which includes:
- a control piston (28) having at least one control groove (29a, 29b, 29c);
- a control pressure chamber (15) for a fluid medium, having a control pressure connection (20) and an outlet (21) which connects to at least the converter clutch control pressure connection (22);
- a counterpressure chamber (18) located at the opposite end of the valve body (12) to the control pressure chamber (15) and having a supply line for the fluid medium which includes at least one throttle element (44);
- a converter coupling supply pressure connection (24) connected by way of a first working chamber (16) to a cooler outlet (23; and
- a supply pressure connection (26) connected by way of a second working chamber (17) to a converter clutch counterpressure outlet (25);
wherein through the fluid medium a counterpressure is furnished from the supply line to the counterpressure chamber (18) to inhibit high accelerations of the control piston (28) in the direction counter to the electromagnetic control element (11).

2. A pulse width modulated magnetic valve according to claim 1, characterised in that the inflowing fluid medium is a pressure medium such as hydraulic oil.

3. A pulse width modulated magnetic valve according to any preceding claim, characterised in that the counterpressure in the counterpressure chamber (18) is variable.

4. A pulse width modulated magnetic valve according to any preceding claim, characterised in that the counterpressure in the counterpressure chamber (18) is 0.1 - 5 bar, preferably 1 - 3 bar and particularly preferably about 1 bar.

5. A pulse width modulated magnetic valve according to any preceding claim, characterised in that the throttle element (44) includes at least one throttle valve.

6. A pulse width modulated magnetic valve according to any preceding claim, characterised in that the counterpressure chamber (18) has differing cross-sections.

## Revendications

1. Electrovanne à modulation d'impulsions en largeur pour commander des convertisseurs de couple hydrodynamiques de transmissions automatiques, comprenant: un élément électromagnétique de pilotage (11) et un corps de vanne ou de distributeur (12) qui comporte:
- un piston ou tiroir de distribution (28) présentant au moins une gorge de distribution (29a, 29b, 29c);
- une chambre de pression de pilotage (15) pour un milieu fluide, présentant un raccord de pression de pilotage (20) et une sortie (21) qui communique avec au moins un raccord (22) de pression de commande d'un embrayage de convertisseur;
- une chambre de contre-pression (18) disposée à l'extrémité du corps de vanne (12) située à l'opposé de la chambre de pression de pilotage (15) et à laquelle est coordonnée une conduite d'alimentation pour le milieu fluide, conduite qui présente un élément d'étranglement (44);
- un raccord (24) de pression d'alimentation de l'embrayage de convertisseur, qui est relié à travers une première chambre de travail (16) à une sortie de refroidisseur (23); et
- un raccord (26) de pression d'alimentation relié à travers une seconde chambre de travail (17) à une sortie (25) de contre-pression de l'embrayage de convertisseur;
et dans laquelle, au moyen du milieu fluide, une contre-pression est fournie à partir de la conduite d'alimentation à la chambre de contre-pression (18) en vue du freinage de fortes accélérations du tiroir (28) dans la direction contraire à l'élément électromagnétique de pilotage (11).

2. Elecrovanne à modulation d'impulsions en largeur selon la revendication 1, caractérisée en ce que le milieu fluide entrant est un milieu de pression tel que de l'huile hydraulique.

3. Electrovanne à modulation d'impulsions en largeur selon une des revendications précédentes, caractérisée en ce que la contre-pression dans la chambre de contre-pression (18) est variable.

4. Electrovanne à modulation d'impulsions en largeur selon une des revendications précédentes, caractérisée en ce que la contre-pression dans la chambre de contre-pression (18) est comprise entre 0,1 et 5 bars, de préférence entre 1 et 3 bars, et correspond, de façon particulièrement préférée, à environ 1 bar.

5. Electrovanne à modulation d'impulsions en largeur selon une des revendications précédentes, caractérisée en ce que l'élément d'étranglement (44) comprend au moins une soupape d'étranglement.

6. Electrovanne à modulation d'impulsions en largeur selon une des revendications précédentes, caractérisée en ce que la chambre de contre-pression (18) présente différentes sections droites.
